# EUROPÄISCHE PATENTSCHRIFT

(11) **EP 1 741 012 B1**
(45) Veröffentlichungstag und Bekanntmachung des Hinweises auf die Patenterteilung: **14.11.2007**
(21) Anmeldenummer: 05731558.2
(22) Anmeldetag: 22.04.2005
(51) Int. Cl.: G05B 19/4093

(54) **BESTIMMUNG VON PROZESS-OPERATIONEN ZUR BESCHREIBUNG VON UMFORMPROZESSEN AN EINEM UMFORMTEIL**
DETERMINATION OF PROCESS OPERATIONS IN ORDER TO DESCRIBE FORMING PROCESSES ON A FORMING PART
DETERMINATION D'OPERATIONS DE PROCESSUS POUR LA DESCRIPTION DE PROCESSUS DE FORMAGE SUR UNE PIECE FORMEE

(30) Priorität: 27.04.2004 CH 731042004
(43) Veröffentlichungstag der Anmeldung: 10.01.2007
(73) Patentinhaber: Autoform Engineering GmbH, 8173 Neerach (CH)
(72) Erfinder: KUBLI, Waldemar, CH-8173 Neerach (CH); HILLMANN, Matthias, CH-8049 Zürich (CH)
(74) Vertreter: Müller, Markus Andreas
(86) Internationale Anmeldenummer: PCT/CH2005/000227
(87) Internationale Veröffentlichungsnummer: WO 2005/103850

(56) Entgegenhaltungen:
- EP-A- 0 955 105
- FR-A- 2 711 326

## Beschreibung

Die Erfindung bezieht sich auf das Gebiet der Bestimmung und Optimierung von Bearbeitungsschritten bei der Herstellung von Blechumformteilen, beispielsweise mittels Tief-/Streckziehprozessen. Sie bezieht sich auf ein Verfahren, ein Datenverarbeitungssystem, ein Computerprogramm und einen Datenträger zur Bestimmung von Prozess-Operationen zur Beschreibung von Umformprozessen an einem Umformteil gemäss dem Oberbegriff der entsprechenden unabhängigen Patentansprüche.

### STAND DER TECHNIK

Die veröffentlichte Anmeldung EP 0 955 105 A offenbart ein Verfahren zur Bestimmung, mittels eines Computersystems, von Biege-Reihenfolgen beim Umformprozess an einem Umformteil, um eine Vermessung jeder bearbeiteten Biegung zu ermöglichen.

Blechumformteile werden in der Regel durch Tiefziehen hergestellt. Das Halbzeug, die sogenannten Blechplatinen (Platinen), werden zu diesem Zweck in mehrteilige Umformwerkzeuge gelegt. Mittels Pressen, in denen die Umformwerkzeuge eingespannt sind, werden die Teile geformt. Die Teile werden in der Regel über mehrere Umformstufen durch Bearbeitungsschritte wie Ziehen, Nachschlagen, Einstellen, etc., kombiniert mit Beschneidschritten, aus einer flachen Blechplatine hergestellt.

Das Dimensionieren und Einstellen der Umformwerkzeuge stellt heute eine grosse Problematik dar. Nicht selten vergehen mehrere Monate, bis ein Werkzeug zufriedenstellend funktioniert. Häufig handelt es sich um einen iterativen Prozess, der mit viel Ausschussteilen, Energie- und Ressourcenverbrauch verbunden ist. Der Entwurf erfolgt heute weitgehend manuell und äusserst zeitaufwendig mittels Computer-Aided-Design-Systemen (CAD). Solche CAD-Systeme modellieren eine Geometrie von physischen Körpern, insbesondere also von Umformteilen in verschiedenen Stadien der Bearbeitung, und von entsprechenden Werkzeugen. Unter "Geometrie" wird hier eine (computerlesbare) Darstellung der geometrischen Ausdehnung eines Körpers verstanden, beispielsweise in Form eines Finite-Elemente-Gitter, oder aus einer Menge von parametrisierten Elementarkörpern und/oder Flächen.

In dieser Weise wird ein Methodenplan entwickelt, der unter anderem eine Folge von zu erzeugenden Teilegeometrien beschreibt. Dabei wird das Modell jedes Zustands im wesentlichen manuell aus Grundbausteinen oder aus einem anderen Modell durch Modifikation erzeugt. Der Methodenplan beschreibt in der Regel auch eine Zuordnung von einzelnen Umformoperationen zu den Teilegeometrien. Daraus werden manuell und nur zu einem kleinen Teil computergestützt, Parameter der Umformoperationen definiert und die Umformpressen respektive Werkzeuge ausgelegt.

Ein Methodenplan besteht heute in der Regel aus einem Satz von 2D Zeichnungen. Ausgehend vom fertigen Bauteil wird zuerst die Ziehstufe festgelegt. Von dieser Ziehstufe ausgehend werden dann die nachfolgenden Operationen definiert, wobei die Nachschlag-, Abkant-, Beschnitt- und Schieberoperationen nur durch die Angabe des Bereiches und die Arbeitsrichtung definiert werden. Es werden in der Regel keine 3D Flächen für die Werkzeuge aufgebaut.

Das beschriebene Vorgehen ist sehr aufwendig und inflexibel.

### DARSTELLUNG DER ERFINDUNG

Es ist deshalb Aufgabe der Erfindung, ein Verfahren, ein Datenverarbeitungssystem, ein Computerprogramm und einen Datenträger zur Bestimmung von Prozess-Operationen zur Beschreibung von Umformprozessen an einem Umformteil der eingangs genannten Art zu schaffen, welche die oben genannten Nachteile behebt.

Diese Aufgabe lösen ein Verfahren, ein Datenverarbeitungssystem, ein Computerprogramm und ein Datenträger zur Bestimmung von Prozess-Operationen zur Beschreibung von Umformprozessen an einem Umformteil mit den Merkmalen der entsprechenden unabhängigen Patentansprüche.

Das Verfahren zur Bestimmung, mittels eines computergestützten Designsystems, von Prozess-Operationen zur Beschreibung von Umformprozessen an einem Umformteil, weist die folgenden Schritte auf:
- Definieren von Geometriemodellen zur computertechnischen Beschreibung einer Geometrie des Umformteiles in einem Zielzustand;
- Definieren von mehreren Geometrie-Operatoren, wobei ein Geometrie-Operator eine Geometrie eines Bereiches eines ersten Geometriemodells mit einer Geometrie eines Bereiches eines zweiten Geometriemodells assoziiert, und der Geometrie-Operator einen Übergang von einer der beiden assoziierten Geometrien zu der anderen beschreibt; und
- Definieren von mehreren Gruppen von jeweils mindestens einem Geometrie-Operator, wobei jede der Gruppen jeweils mit einer Prozess-Operation assoziiert ist.

Damit wird eine strukturierte Verarbeitung und Darstellung der Bearbeitungsschritte respektive einer Sequenz von Prozess-Operationen mittels der Zuordnung zu den damit erreichten geometrischen Modifikationen in einem korrespondierenden Teilgeometriemodell erreicht. Die unterschiedlichen Betrachtungsweisen in der geometriebasierten Entwurfswelt und der prozessbasierten Welt der Auslegung von Umformwerkzeugen werden auf diese Weise in einen praktisch nutzbaren Zusammenhang gebracht.

Diese Art der Gruppierung respektive Strukturierung der Geometrie-Operatoren erlaubt eine produktionsnahe Darstellung und Verarbeitung der ursprünglich rein geometrisch formulierten Informationen. Die Verknüpfung respektive Assoziierung von Geometriebereichen verschiedener Stufen untereinander und an Prozess-Operationen erlaubt eine automatische und konsistente Propagation von Änderungen der Geometrie einer bestimmten Stufe zu den anderen Stufen und zu Parametern der Prozess-Operationen.

Durch den Operator werden bestimmte Bereiche von zwei Geometriemodellen einander assoziativ zugeordnet und sind somit assoziativ aneinander gebunden. Der Operator beschreibt eine Änderung einer Geometrie, in der Regel durch Anwendung eines Werkzeuges. Dabei sind Parameter des Operators aufgrund vorgegebener Geometrien definiert respektive berechenbar, oder umgekehrt ist eine Geometrie aus der anderen aufgrund von vorgegebenen Parametern des Operators berechenbar.

In diesem Zusammenhang bedeutet der Begriff "Definieren" das Erstellen einer computertechnischen, d.h. computerlesbaren und durch einen Computer respektive eine technische Datenverarbeitungseinheit verarbeitbaren Darstellung. Das Definieren geschieht in der Regel durch computergestützte Benutzereingaben und durch Berechnungen, welche die Benutzereingaben mit bereits berechneten und/oder gespeicherten Daten kombinieren. Derart definierte Daten können in einem CAD System erzeugt und/oder in einer Datei zwischengespeichert werden.

Der Begriff "Bereich" eines Geometriemodells ist dahingehend zu verstehen, dass er auch das gesamte Geometriemodell umfassen kann. Ein solcher Bereich eines Umformteiles weist in der Regel ein oder mehrere geometrische Merkmale oder Form-Merkmale auf, so zum Beispiel Ausbuchtungen, Flansche, Rundungen, Löcher etc. Solche Merkmale sind durch ein rein geometrisches Modell, zum Beispiel durch ein Finite-Elemente-Gitter oder aus einer Menge von parametrisierten Elementarkörpern und/oder Flächen dargestellt.

Zu der Definition von Geometriemodellen und Geometrie-Operatoren sind zwei Vorgehensvarianten möglich: Bei beiden wird von einem Bereich eines ersten Geometriemodells eines weiter bearbeiteten Teils ausgegangen und wird ein Bereich eines zweiten Geometriemodelles eines weniger weit bearbeiteten Teils bestimmt.
- In einer ersten Variante der Erfindung wird dabei das zweite Geometriemodell vorgegeben, beispielsweise durch eine benutzergesteuerte Änderung einer Kopie des ersten Geometriemodelles. Aus den beiden Geometriemodellen kann eine Beschreibung des Operators automatisch abgeleitet werden, beispielsweise in Form von Werkzeugen, entsprechend einem Umform-Prozessschritt in umgekehrter Richtung.
- In einer zweiten Variante der Erfindung werden das erste Geometriemodell und eine soweit nötig parameterisierte Version des Geometrie-Operators vorgegeben, und wird das zweite Geometriemodell daraus automatisch berechnet. Beispielsweise kann ein Operator zur Vergrösserung von Radien aus einer Kante mit einem kleinen Biegeradius in einem Bereich des ersten Geometriemodelles eine gleich verlaufende Kante mit grösserem Biegeradius im zweiten Geometriemodell berechnen. Diesem Geometrie-Operator entspricht beim umgekehrt verlaufenden Umformprozess ein Nachformen oder Schärfen von Kanten.
   Es wird also mindestens einer der Geometrie-Operatoren auf einen ersten der assoziierten Geometrien eines Bereiches angewandt und daraus automatisch die zweite der assoziierten Geometrien eines Bereiches berechnet. Es ist dadurch also möglich, ein Geometriemodell automatisch zu bestimmen, indem die Geometrie-Operatoren, welche die einzelnen Bereiche respektive Merkmale dieses Geometriemodells mit vorangehenden Geometriemodellen verknüpfen, auf letztere angewandt werden.

Welche Variante zweckmässig ist, hängt vom Typ des Geometrie-Operators ab. Mögliche Typen von Geometrie-Operatoren werden weiter unten vorgestellt.

In diesem Vorgehen ist auch eine aufeinanderfolgende Anwendung von mehreren Geometrie-Operatoren auf assoziierte Bereiche enthalten. Ein Geometriemodell respektive ein Teil davon entsteht dabei also durch Anwendung eines Geometrie-Operators und ist selber wieder Ausgangsgeometrie für eine Anwendung eines zweiten Geometrie-Operators. Dies entspricht einer - in umgekehrter Richtung - aufeinanderfolgenden Anwendung von verschiedenen Umform-Teilschritten.

In einer weiteren bevorzugten Variante der Erfindung werden mehrere Geometriemodelle von Bereichen als Definition einer Geometriestufe gruppiert, wobei eine Geometriestufe eine fiktive oder auch reale Geometrie des Umformteiles als Ganzem beschreibt. "Fiktiv" bedeutet, dass die Geometrie in einer ganz bestimmten Abfolge von Umformoperationen real hergestellt werden könnte, aber nicht zwingend hergestellt werden muss.

Damit ist es möglich, eine Geometrie einer Geometriestufe aus einer Geometrie mindestens einer vorangehenden Geometriestufe durch Anwendung der entsprechenden Operatoren zu berechnen. "Vorangehend" bedeutet bezüglich der Geometriestufen, eine im Design der Geometriestufen früher erstellte Geometriestufe. Es geht also die Geometriestufe, die dem fertig geformten Umformteil entspricht, allen anderen Geometriestufen voran.

Im Gegensatz dazu ist die Betrachtungsweise im Rahmen der Umformprozesse die umgekehrte: hier ist die unbearbeitete, flache Blechplatine diejenige, die allen anderen Umformstufen vorangeht.

In einer verfeinerten Betrachtungsweise kann eine erste Geometriestufe, von der ausgegangen wird, und welche dem fertig geformten Umformteil entspricht respektive dieses definiert, als Ziel-Geometriestufe betrachtet werden. Weitere Geometriestufen werden dann als Zwischen-Geometriestufen betrachtet. Diese Betrachtungsweise wird üblicherweise als Methodenplan bezeichnet. Der Methodenplan besagt, wie Zwischen-Geometriestufen oder Zwischengeometrien bei der Produktion geformt sein sollten, und zum Teil auch, in welchem Umformschritt welcher Teilbereich des Umformteiles in welcher Art geformt wird.

Die Zwischenstufen des Methodenplans bilden für den Designer eine gedankliche Ordnungshilfe bei der Kombination und Definition der verschiedenen Geometrie-Operatoren. Sie können also, wie oben erwähnt, "fiktive" Zwischenstufen sein. Die tatsächliche Kombination und Abfolge bei der Anwendung der Geometrie-Operatoren im Umformprozess weichen typischerweise davon ab. Zum Beispiel kann eine Beschneideoperation mit einer langen oder selbst einer umlaufenden Schnittkante auf mehrere Umformprozess-Operationen aufgeteilt werden.

In einer weiteren bevorzugten Variante der Erfindung wird bei einer Änderung einer Geometrie eines Bereiches, eine automatische und rekursive Neuberechnung von abhängig verknüpften Geometrien von Bereichen nach Massgabe des verknüpfenden Operators durchgeführt. "Abhängig verknüpft" wird in dem Sinne verstanden, dass eine zweite Geometrie, welche durch Anwendung eines Geometrie-Operators aus einer ersten Geometrie berechnet wird, abhängig mit der ersten Geometrie verknüpft ist.

Dadurch wird es möglich, Änderungen in einer Geometrie, insbesondere in der Ziel-Geometriestufe vorzunehmen, und diese rekursiv in die nachfolgenden Geometriestufen zu propagieren. Ohne weitere manuelle Arbeit werden so alle anderen Geometriemodelle, also der gesamte Methodenplan, automatisch angepasst.

In einer weiteren bevorzugten Variante der Erfindung weisen die Geometrie-Operatoren mindestens einen der folgenden Operatortypen auf. Zu einzelnen Operatortypen sind jeweils bevorzugte Implementationsvarianten beschrieben.

**Löcher füllen:** Im Ausgangsteil vorhandene Löcher werden mit Hilfe von speziellen Algorithmen automatisch gefüllt. Für den umgekehrt ablaufenden Herstellungsprozess bedeutet dies, dass eine Schnittoperation stattfindet.

**Ziehgeometrie ankonstruieren:** Für eine Ziehgeometrie wird vorzugsweise eine über Profile parametrisierte Ankonstruktion und eine Blechhalterfläche an das Bauteil angefügt. Hierdurch wird automatisch für einen weiteren, nachfolgenden Operator, beispielsweise **"Ziehstufe abwickeln"** eine Ziehstufe mit Stempel, Blechhalter und Matrize definiert. Zusätzlich wird eine Schnittlinie längs des Bauteilrandes, ggf. einschließlich ausgelegter Flansche, auf der Geometriestufe festgelegt.

**Abkantflansche ankonstruieren:** Zunächst werden die in der entsprechenden Geometriestufe zu formenden Flansche gewählt. Hieraus werden parametrisch definierte Abkantbacken automatisch an das Bauteil (ohne Flansche) ankonstruiert.

Dies entspricht dem Zustand bei geschlossenen Werkzeugen. Daraus werden wie oben automatisch für einen weiteren, nachfolgenden Operator Auflage, Halter und Abkantbacke erzeugt. Die Schnittlinie ergibt sich durch Auslegen des Flansches auf die Abkantbacke.

**Ausklappen:** In einer Geometriestufe können Bereiche ausgewählt und um eine Achse gedreht werden. Die übrigen Bereiche bleiben entweder unverändert oder bilden einen Übergangsbereich, welcher automatisch verformt wird, um einen Anschluss zwischen den bewegten und festen Bereichen herzustellen. Durch diese Klappoperation können z.B. Bauteile geöffnet und Flansche aufgestellt werden.

**Entschärfen:** Dies beinhaltet verschiedene Methoden, ein Bauteil lokal zu vereinfachen, um den Herstellungsprozess zu ermöglichen. Hierbei kann es sich z.B. um Vergrößern von Radien handeln, aber auch um Ersetzen von komplizierten Geometrieteilen durch einfachere.

**Bombieren oder Überdrücken:** Eine Geometrie wird bombiert, um Rückfederung zu kompensieren. Es steht eine spezielle Funktionalität bereit, welche gestattet, Bereiche der Geometrie auszuwählen und an beliebigen Orten Verschiebungen vorzugeben. Aus diesen Verschiebungen wird eine glatte Funktion ermittelt, die insbesondere am Rand des bombierten Bereiches Null ist, und der existierenden Geometrie additiv überlagert.

Diese Operatortypen können gruppiert werden als
- Geometrie-Erweiterungen: Löcher füllen und Ziehgeometrie ankonstruieren (Blechhalter und Ankonstruktion).
- Geometrie-Modifikationen: Geometriebereiche klappen, Geometriebereiche entschärfen, Flanschgeometrie ankonstruieren und Flächen bombieren.

In einer weiteren bevorzugten Variante der Erfindung beinhaltet eine Anwendung mindestens eines Operators eine Simulation eines Umformprozesses. Beispielsweise wird aus einer in einer zweiten Geometriestufe festgelegten Schnittlinie durch physikalische Simulation bestimmt, wo die Schnittlinie nach einer oder mehreren Umformschritten in einer ersten Geometriestufe zu liegen kommt, und die festgelegte Schnittlinie in der zweiten Geometriestufe bei Bedarf iterativ korrigiert. Als Resultat des Iterationsprozesses ergibt sich der Verlauf der Schnittlinie in der zweiten Geometriestufe in Funktion des Verlaufs in der ersten Geometriestufe. Der gesamte Iterationsprozess kann als Teil einer Anwendung des Geometrie-Operators auf den entsprechenden Bereich der ersten Geometriestufe ausgedrückt werden.

In einer weiteren bevorzugten Variante der Erfindung findet eine Gliederung einer Beschreibung von Umformprozessen auf einem computerlesbaren Medium und/oder für eine Benutzerschnittstelle entsprechend den Gruppen von jeweils mehreren Geometrie-Operatoren statt. Damit wird die erfindungsgemässe Gruppierung in einer für einen Benutzer oder für ein Programm dank der Strukturierung einfachen Darstellung einfach zugänglich.

In einer weiteren bevorzugten Variante der Erfindung wird ein automatisches Erzeugen von Werkzeug- und Bearbeitungsparametern zur Realisierung mindestens eines der Geometrie-Operatoren durchgeführt. Zu den Geometrie-Operatoren existieren also in der Regel jeweils zugeordnete und abhängig verknüpfte Werkzeug- und Bearbeitungsparameter. Damit ist eine weitgehende Automatisierung des Werkzeugsentwurfs realisierbar. Dies geschieht durch die Reduktion aller Bearbeitungsschritte auf elementare Geometrie-Operatoren, für welche ein automatischer Werkzeugentwurf überhaupt möglich ist.

Ein Satz von Werkzeugen für eine einzelne Umformoperation oder gegebenenfalls für eine ganze Prozess-Operation besteht in der Regel aus drei Werkzeugen: einer Matrize oder einer Menge von Backen, einem Halter, und einem Stempel oder einer Auflage. Zusätzlich können innere Halter und/oder Schieber vorliegen. Die Hauptarbeit bei der Definition der Werkzeuge liegt in der Bestimmung ihrer Geometrie sowie der Arbeitsrichtung der sich bewegenden Werkzeuge. Weitere Parameter wie Arbeitskräfte und -Geschwindigkeit können zum Beispiel unter Verwendung von Standardwerten und/oder Materialeigenschaften daraus abgeleitet werden. Bei der automatischen Bestimmung der Werkzeuggeometrie ist zur Hauptsache die Zielgeometrie, das heisst, die Geometrie des resultierenden umgeformten Bereichs massgebend. Zusätzlich oder alternativ werden dafür auch Parameter der Ausgangsgeometrie oder einer anderen, in der Regel vorangehenden Geometriestufe verwendet.

Vorzugsweise wird auch bei einer Änderung einer Geometrie eines Bereiches eine automatische Neuberechnung von abhängig verknüpften Werkzeug- und Bearbeitungsparametern durchgeführt.

In einer bevorzugten Variante der Erfindung wird anhand der berechneten Werkzeugparameter und der Gruppierung der Umformprozessschritte eine Simulation einzelner Umformprozessschritte, einer Prozess-Operation oder der ganzen Folge von Prozess-Operationen durchgeführt. Damit werden die Änderungen im Entwurf der Geometrien automatisch auf die Werkzeuge und weiter auf das umgeformte Blech propagiert und sind Auswirkungen auf den Herstellungsprozess ohne weitere wesentliche Benutzerinteraktion sichtbar. Unzulässige Belastungen und Zustände können aufgrund der Simulation erkannt werden, und die Geometrien können entsprechend korrigiert werden.

Unter dem Begriff Simulation wird in diesem Zusammenhang eine Simulation eines Umform- oder Bearbeitungsprozesses verstanden, welche die physikalischen Eigenschaften eines Objektes berücksichtigt. Ebenfalls berücksichtigt werden Eigenschaften des Prozesses, wie beispielsweise Reibungen, Schmierung, Bearbeitungsgeschwindigkeit. In der Simulation werden beispielsweise Finite-Elemente-Methoden, finite Differenzen, "boundary element methods" oder sogenannte "meshless methods" benutzt.

Im Gegensatz zu einem CAD-System, welches statische Zustände modelliert, modelliert die Simulation einen dynamischen Prozess oder einen Übergang zwischen Zuständen unter Berücksichtigung und/oder Berechnung von physikalischen Eigenschaften wie Spannungen, Dehnungen, Schnittkräfte, Verfestigung, etc. CAD-Systeme und Simulationssysteme sind in der Umformtechnik bisher als getrennte Programmsysteme implementiert. Eine Interaktion findet bisher allenfalls durch einen Datenaustausch von Geometriedaten statt.

Das Datenverarbeitungssystem zur Bestimmung von Prozess-Operationen zur Beschreibung von Umformprozessen an einem Umformteil weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zur Bestimmung von Prozess-Operationen zur Beschreibung von Umformprozessen an einem Umformteil gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Dargestellt werden jeweils Schnitte durch im Allgemeinen dreidimensional gekrümmte Geometriestufen. Die Haupt-Arbeitsrichtung ist jeweils die vertikale Richtung. Es zeigen jeweils schematisch
- Figuren 1 und 2: eine Folge von Geometriestufen zur Beschreibung von Zwischenschritten bei der Herstellung eines Umformteiles;
- Figur 3: eine Zuordnung von Geometrie-Operatoren zu Prozess-Operationen; und
- Figur 4: oben: verschiedene Blechformen im Zusammenhang mit Flanschen und Ankonstruktionen;
Mitte: Werkzeugformen zur Erzeugung von Abkantflanschen;
unten: Werkzeugformen zur Erzeugung von Einstellflanschen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

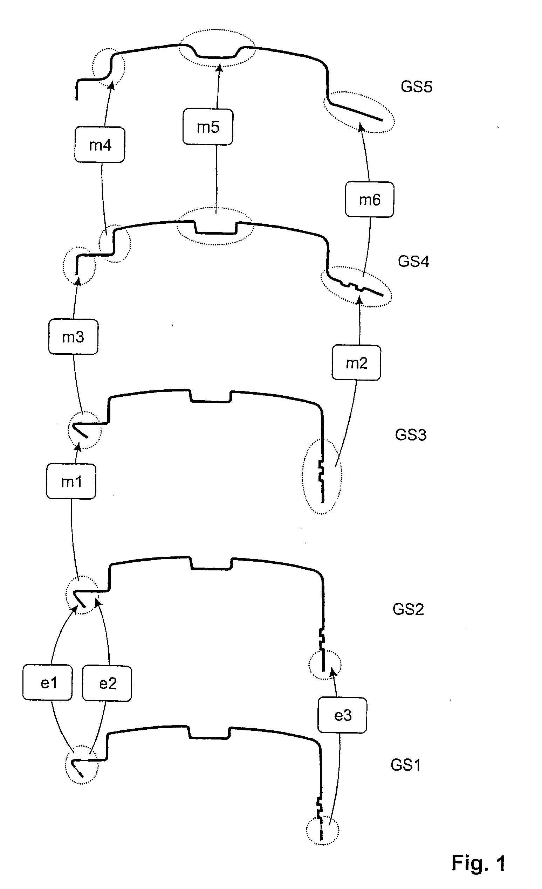

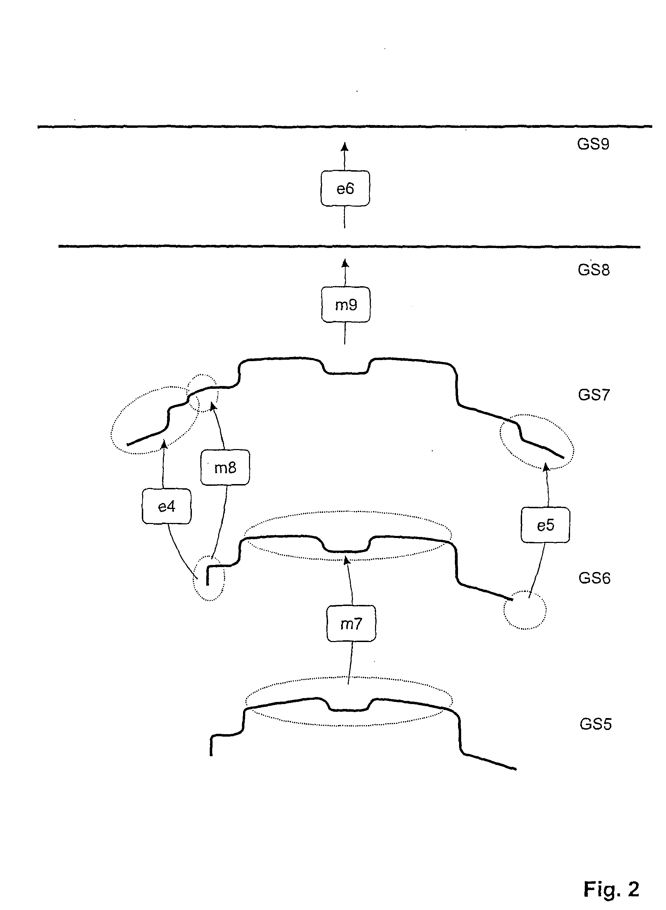

Die Figuren 1 und 2 zeigen eine Folge von Geometriestufen zur Beschreibung von Zwischenschritten bei der Herstellung eines Umformteiles. Die Folge beginnt mit einer Ziel-Geometriestufe GS1 zuunterst in der Figur 1 und setzt sich bis zu einer Geometriestufe GS9 entsprechend einer Platine im flachen Zustand angeordnet auf dem Coil respektive einem kontinuierlichen Blechband, zuoberst in der Figur 2, fort. Eine Zwischen-Geometriestufe GS5 zuoberst in Figur 1 ist zuunterst in Figur 2 wiederholt dargestellt:

Es wird beim Entwurf der Geometrien von dem fertigen Bauteil GS1 ausgegangen und dieses schrittweise vereinfacht, zum Beispiel bis zu der ebenen Blechplatine auf dem Coil GS9. Der Anschaulichkeit halber werden mehrere Vereinfachungsschritte jeweils zusammengefasst durch eine Geometriestufe GS1-GS9 dargestellt. Der Unterschied von einer Geometriestufe zur anderen, in einem bestimmten geometrischen Bereich derselben, definiert erforderliche Werkzeuge wie Ziehwerkzeuge, Nachformwerkzeuge, Abstellbacken, Schieber etc., sowie den erforderlichen Prozess wie Umformen oder Schneiden. Diese Bereiche respektive deren Geometriemodelle sind durch Operatoren assoziativ gekoppelt, wobei i.A. eine Stufe von der ihr im Umformprozess nachfolgenden Stufe abhängt. Die Formen der Werkzeuge für die Umformoperationen sind aufgrund der Daten der Geometriestufen GS1-GS9 und/oder der Operatoren automatisch als 3D-Modelle berechenbar und sind z.B. für die Simulation des Produktionsprozesses verwendbar.

Wenn ein Operator auf einen Geometriebereich angewandt wird, der durch einen anderen Operator erzeugt oder modifiziert wird, so sind diese beiden Operatoren miteinander verkettet. Über die Anwendung von verketteten Operatoren wird also ein Geometriebereich einer Stufe über mehrere Stufen hinweg auf eine nachfolgende Stufe abgebildet.

Die Operatoren sind gruppiert als Operatoren zur Geometrie-Modifikation m1-m9 oder als Operatoren zur Geometrie-Erweiterung e1-e6 dargestellt. Die Anwendung eines Operators auf einen bestimmten Bereich der Geometrie entspricht einer Änderung der Geometrie von einer Stufe zur andern. In Bereichen, zu denen kein Operator definiert ist, bleibt die Geometrie unverändert. Die wichtigsten einzelnen Geometrie-Operatoren sind gemäss den Typen
- Löcher füllen,
- Ziehgeometrie ankonstruieren / Flansche abwickeln,
- Abkantflansche ankonstruieren,
- Überdrücken,
- Ausklappen,
- Entschärfen / Vorlagen generieren,
- Bombieren,
- Ziehgeometrie abwickeln,
- Platine auf Coil anordnen, und
- Rotieren
gruppierbar. Je nach Typ des Operators sind entsprechende Werkzeuggeometrien und weitere Parameter in verschiedener Weise automatisch bestimmbar.

Die verschiedenen Operatoren sind im folgenden beschrieben, und werden anschliessend beispielhaft in den Figuren 1 und 2 angewandt gezeigt. Dabei werden die Terme "Zielgeometrie" und "Ausgangsgeometrie" wie folgt verwendet: Die Zielgeometrie ist ein Bereich einer ersten Geometriestufe, die Ausgangsgeometrie ein Bereich einer zweiten abhängigen Geometriestufe; der Geometrie-Operator führt die Zielgeometrie in die Ausgangsgeometrie über. Wenn im folgenden von Geometrie-Operatoren und Geometriestufen die Rede ist, dann wird die Ausgangsgeometrie als eine "nächste" Stufe nach der Zielgeometrie bezeichnet. Jedem Geometrie-Operator entspricht ein Umformprozessschritt, welcher im Umformprozess aus der Ausgangsgeometrie die Zielgeometrie erzeugt. Der zum Geometrie-Operator gehörende Umformprozessschritt ist im Titel jeweils in Klammern gesetzt. Wenn von Umformprozessen die Rede ist, dann entsteht jeweils eine "nächste" Umformstufe (entsprechend einer Zielgeometrie) durch Umformen einer vorangehenden Umformstufe (entsprechend einer Ausgangsgeometrie).

Die Operatoren sind durch zumindest eine der beteiligten Geometrien sowie die zweite Geometrie und/oder durch vorgebbare Parameter definiert. Oft sind die Zielgeometrie und die Ausgangsgeometrie vorgegeben und werden daraus weitere Parameter berechnet, insbesondere Werkzeugparameter des zugeordneten Umformprozessschrittes. In manchen Fällen sind die Zielgeometrie und ein OperatorParameter vorgegeben und wird daraus zuerst die Ausgangsgeometrie automatisch berechnet.

### Löcher füllen (lochen bzw. beschneiden):

Werden von einer Geometriestufe zur nächsten Geometriestufe Löcher gefüllt oder Ränder ergänzt, so bedeutet das für den Umformprozess, dass eine Schnittoperation definiert ist. Die Schnittkonturen werden durch die Berandungslinien der Löcher bestimmt.

Die Schnittkonturen werden jeweils sukzessive auf alle abhängigen Geometriestufen übertragen. Dies ermöglicht, die Löcher in einer beliebigen nachfolgenden (also im Prozessverlauf vorangehenden) Geometriestufe zu schneiden, also nicht nur in der Geometriestufe, wo die Löcher gefüllt werden. Die Übertragung erfolgt
- im Falle des parametrisierten Geometrie-Operators durch Anwendung des Geometrie-Operators auch auf die Schnittkonturen,
- und im Falle der Definition des Geometrie-Operators durch die Geometriestufen z.B. durch Projektion der Schnittkontur von der Ziel- auf die Ausgangsgeometrie.

Alternativ kann die Schnittkontur unter Berücksichtigung von Material- und Prozesseigenschaften durch eine physikalische Simulation, z.B. eine inverse Einschrittsimulation von einer Geometriestufe zur nächsten übertragen werden.

Die Operatorparameter und damit die Werkzeugparameter sind durch die Geometriestufe bestimmt, auf welcher der Beschnitt durchgeführt wird: Die Arbeitsrichtung für den Beschnitt wird durch eine integrierte Beschnittanalyse bestimmt, welche die maximal zulässigen Winkel zwischen Schneidewerkzeug und Umformteil analysiert und basierend darauf eine optimale Schnittrichtung vorschlägt.

Die Übertragung der Schnittkonturen auf die abhängigen Geometriestufen sowie die Bestimmung der Arbeitsrichtung des Beschnittes wird analog auch für Randbeschnitte durchgeführt und wird für die folgenden Operatoren, welche solche Randbeschnitte definieren, nicht mehr speziell erwähnt.

### Ziehgeometrie ankonstruieren / Flansche abwickeln (beschneiden / abkanten oder einstellen):

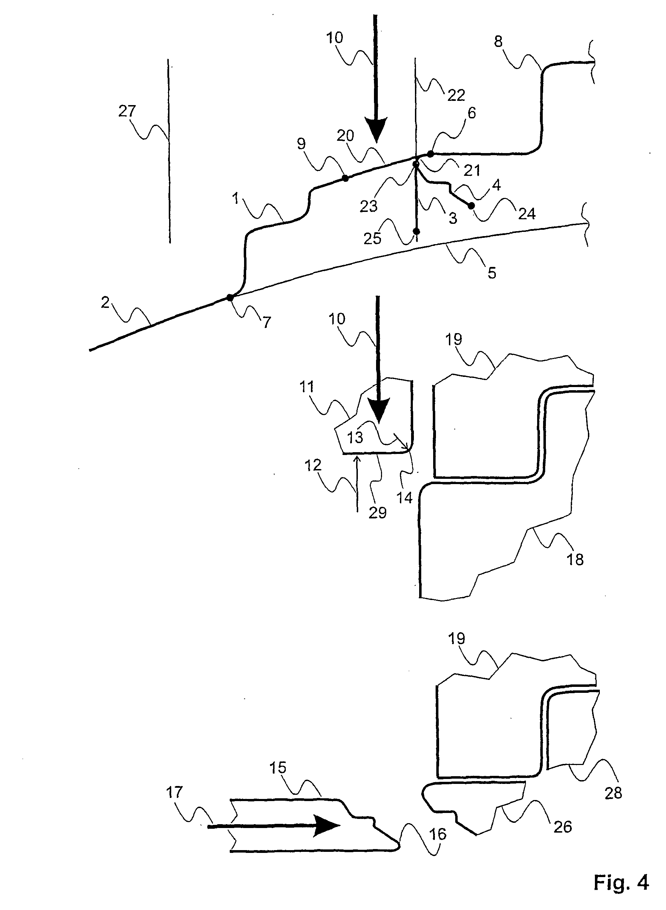

Die folgenden Schritte des bevorzugten automatisierten Vorgehens sind anhand von Figur 4 beschrieben. Von einer Geometriestufe auf die andere wird eine Ziehgeometrie, d.h. Addendum 1 (welches auch einen Bereich 20 entsprechend einem abgewickelten Flansch beinhaltet) und Blechhalterring 2, ankonstruiert. Dabei werden allfällige Flansche 3 oder 4 inklusive dem vollständigen Biegeradius 21 oder Teilen davon entlang eines Randes 6 manuell und/oder computerunterstützt aus dem Geometriemodell entfernt. Bei der manuellen Entfernung wird der Rand 6 durch einen Benutzer vorgegeben, bei der computerunterstützten Entfernung wird beispielsweise ein Bereich der Blechgeometrie durch einen Benutzer ausgewählt, und darin wird automatisch der Rand 6 als Ansatz von gekrümmten Bereichen bestimmt, deren Krümmungsradius einen vorgegebenen Wert unterschreitet. Das Geometriemodell wird manuell, gegebenenfalls computergestützt, um Addendum 1 und Blechhalterring 2 erweitert und die entfernten Flansche 3 oder 4 werden auf die ankonstruierte Geometrie 1 und 2 abgewickelt. Falls der Flansch 3 oder 4 ein, wie weiter unten beschrieben, vorher automatisch erzeugter Abkantflansch 3 ist, ist seine Ausdehnung schon bekannt und er kann auch automatisch entfernt werden. Andernfalls wird er durch den Anwender gelöscht. Für die Ankonstruktion 1 wird zuerst eine Blechhalterfläche 5 generiert, indem der Anwender z.B. Profile vorgibt und über die Profile eine Fläche interpoliert wird. Dann werden an die Geometriestufe längs des Randes 6, nach Entfernung der Flansche 3 oder 4, parametrisierte Profile angesetzt, welche den Rand 6 mit der Blechhalterfläche 5 verbinden und damit die Stempeldurchgangslinie 7 definieren, entlang welcher die Blechhalterfläche 5 zum Blechhalterring 2 ausgeschnitten wird. Die Profile werden an einzelnen Stellen des Randes 6 vom Anwender vorgegeben, an den übrigen Stellen aus den gegebenen Profilen interpoliert, und bilden damit die Ankonstruktionsfläche 1 zwischen der ursprünglichen Geometriestufe 8 (ohne Flansche) und dem Blechhalterring 2. Die Abwicklung der Flansche 3 oder 4 erfolgt z.B. über geometrische Algorithmen, z.B. Messen und Abtragen von Schnittlängen in senkrecht zum Rand 6 stehenden Schnitten, oder unter Berücksichtigung von Material- und Prozesseigenschaften über eine inverse Einschrittsimulation.

Die Operatorparameter sind die zu entfernenden Flanschbereiche 3 oder 4 auf der Zielgeometrie sowie die durch parametrisierte Profile und eine Blechhalterfläche 5 beschriebenen ankonstruierten Bereiche der Ausgangsgeometrie. Der Operator entspricht im Umformprozess einem Beschneidschritt bzw. an Stellen mit Flanschen einem Beschneiden entlang des abgewickelten Flanschrandes 9 mit einem nachfolgenden Abkanten oder Einstellen des Flansches. Aus der Flanschgeometrie wird
- im Falle eines Abkantflansches 3 - dies liegt bei allgemein-zylindrischer Form der abgestellten Flanschflächen vor - automatisch die die Flanschflächen enthaltende unendlich ausgedehnte allgemeine Zylinderfläche bestimmt, vorzugsweise durch Anschmiegen von Geraden, wie weiter unten ausführlicher beschrieben wird. Dann wird die Leitrichtung dieser Zylinderfläche als Arbeitsrichtung 10 für den Abkantschritt bestimmt und dem Anwender angezeigt. Der Anwender hat die Möglichkeit, die Arbeitsrichtung zu akzeptieren oder zu ändern, um zum Beispiel eine Überdrückung zur Kompensation der Rückfederung zu realisieren. Dann werden aus der allgemeinen Zylinderfläche die Abkantbacken 11 erzeugt, wobei der Backenangriff über den Verlauf der Backenhöhe 12 und des Backenradius 13 entlang der Backe 11 vorgegeben werden kann. Die Verläufe von Backenhöhe und Backenradius entlang der Backenkante 14 können aufgrund von mehreren vorgegebenen Querschnitten interpoliert werden oder durch parametrisierte Funktionen vorgegeben werden. Die Werte der Backenhöhe 12 können entweder als Absolutwerte oder relativ, z.B. als in Abkantrichtung gemessene Abstände zur Ankonstruktionsfläche 1 vorgegeben werden. Der in Abkantrichtung gemessene Abstand der Backe 11 zur Ankonstruktionsfläche 1 definiert den Backenangriff und wird visuell dargestellt, z.B. als Farbverteilung auf der Backe 11 oder auf der Ankonstruktion 1. Der Backenboden 29 wird automatisch als glatte Fläche tangentenstetig an die Backenkante 14 angefügt. Aus der Backengeometrie werden automatisch die Werkzeugwege abgeleitet. Aus der Zielgeometrie und aus der allgemeinen Zylinderfläche werden automatisch die zur Lagerung des Umformteiles notwendigen Werkzeuge erzeugt. In der Regel sind dies Auflage 18 und Halter 19;
- im Falle eines Einstellflansches 4 - dies liegt bei einer nicht-allgemein-zylindrischen, komplizierteren und oft bezüglich der Haupt-Arbeitsrichtung hinterschnittigen Form der Flanschflächen vor - oder wenn der Anwender dies wünscht, automatisch ein Einstellschieber 15 oder Formschieber und sein Werkzeugweg abgeleitet, wobei der Schieberangriff über den Verlauf der Verrundungsflächen 16 entlang des Randes der Wirkfläche des Schiebers vorgegeben werden kann. Als Hilfe wird der in Schieber-Arbeitsrichtung gemessene Abstand des Schiebers von der Ankonstruktionsfläche 1 visuell dargestellt, z.B. als Farbverteilung auf dem Schieber 15 oder auf der Ankonstruktion. Eine Schieber-Arbeitsrichtung 17, in welcher der Schieber 15 den Einstellflansch 4 hinterschnittfrei formen kann, wird automatisch vorgeschlagen, wobei hierfür auch mehrere Einstellflansche gleichzeitig ausgewertet werden können. Die Richtung 17 kann vom Anwender angepasst werden. Als Hilfe wird der Bereich aller möglichen Neigungen der Richtung 17, welche nicht zu Hinterschnitten führen, in einem x-y-Diagramm dargestellt. Wenn die vorgegebene Richtung Hinterschnitte bei der Schieberoperation erzeugt, werden diese Bereiche visuell dargestellt, z.B. als Farbverteilung auf dem Flansch 4. Im Falle einer nicht-hinterschnittigen Geometrie des Einstellflansches 4 wird auf analoge Weise statt eines Schieberwerkzeuges 15 ein in Haupt-Arbeitsrichtung wirkendes Nachformwerkzeug generiert. Aus der Zielgeometrie werden automatisch die zur Lagerung des Umformteiles notwendigen Werkzeuge erzeugt. In der Regel sind dies Auflage 28, Halter 19 und ein Füllschieber 26.

Dieser Operator ist ein kombinierter Operator, das heisst sowohl ein modifizierender, das heisst der Flansch wird zu einem abgewickelten Flansch 20 modifiziert, als auch ein erweiternder Operator, das heisst es wird eine Ankonstruktion 1 und 2 ausserhalb des abgewickelten Flansches 20 angefügt.

### Abkantflansche ankonstruieren (einstellen):

Von einer Geometriestufe auf die andere wird ein Abkantflansch 3 erzeugt, welcher als Zwischenstufe für die Erzeugung eines - oft bezüglich der Haupt-Arbeitsrichtung hinterschnittigen - Einstellflansches 4 geformt werden soll. Hierfür wird der Einstellflansch 4 manuell, gegebenenfalls computergestützt entfernt (siehe oben) und durch einen allgemein-zylindrischen Abkantflansch 3 ersetzt. Aus der Geometrie des Einstellflansches 4 wird die Leitrichtung 10 des allgemeinen Zylinders, entsprechend der Arbeitsrichtung für das Abkanten für die Erzeugung des Abkantflansches bestimmt und dem Anwender angezeigt. Diese Richtung wird z.B. so bestimmt, dass der daraus resultierende Abkantflansch 3 möglichst nahe an den Einstellflansch 4 zu liegen kommt, aber diesen nirgends durchdringt, wobei hierfür auch mehrere zu generierende Abkantflansche gleichzeitig berücksichtigt werden können. Der Anwender hat die Möglichkeit, die Richtung zu akzeptieren oder selber eine Richtung vorzugeben. Als Hilfe wird der Bereich aller möglichen Neigungen der Richtung, welche nicht zu Durchdringungen führen, in einem x-γ-Diagramm dargestellt. Bei manuell vorgegebener Richtung werden Durchdringungsstellen von Abkantflansch 3 und Einstellflansch 4 automatisch ermittelt und visuell z.B. als Farbverteilung auf dem Einstellflansch 4 dargestellt. Dann werden in dieser Richtung verlaufende Geraden 27 automatisch von aussen lokal an den Biegeradius 21 des Einstellflansches angeschmiegt. Der geometrische Ort aller solcher Geraden bildet eine allgemeine Zylinderfläche 22. Diese wird nun noch an den Berührungspunkten 23 der Geraden mit dem Biegeradius 21 abgeschnitten. Zudem wird die Berandungslinie 24 des Einstellflansches auf die Zylinderfläche 22 abgewickelt, was eine abgewickelte Berandungslinie 25 ergibt. Dies geschieht entweder geometrisch z.B. über gleiche Schnittlängen in senkrecht zur Biegekante stehenden Schnitten, oder unter Berücksichtigung von Material- und Prozesseigenschaften mit einer inversen Einschrittsimulation. Die Zylinderfläche 22 wird auch an dieser abgewickelten Linie 25 abgeschnitten und bildet nun den Abkantflansch 3.

Die Operatorparameter sind die Flächen des Einstellflansches 4 und die Zylinderrichtung 10. Der Operator entspricht im Umformprozess einem Einstellschritt. Die Werkzeuge werden automatisch aus der Zielgeometrie generiert: Der Einstellschieber 15 oder Formschieber, seine Arbeitsrichtung 17 und sein Werkzeugweg werden wie oben beschrieben aus der Geometrie des Einstellflansches 4 abgeleitet, wobei der Schieberangriff über den Verlauf 16 der Verrundungsflächen entlang des Randes der Wirkfläche des Schiebers vorgegeben werden kann. Als Hilfsmittel wird der in Schieberarbeitsrichtung gemessene Abstand des Schiebers zum Abstellflansch ermittelt und visuell dargestellt, z.B. als Farbverteilung auf dem Schieber oder auf der Zylinderfläche. Ebenfalls aus der Zielgeometrie werden automatisch die zur Lagerung des Umformteiles notwendigen Werkzeuge erzeugt, in der Regel Auflage 28, Halter 19 und Füllschieber 26.

Zusammengefasst weist das beschriebene Verfahren zum automatischen Ankonstruieren von Abkantflanschen 3 und zur Bestimmung von damit zusammenhängenden Bearbeitungsschritten also mehrere der folgenden Schritte auf:
- Bestimmen eines Geometriebereiches einer Ziel-Geometriestufe mit einem Einstellflansch 4.
- Entweder
   - Manuelles oder computerunterstütztes Bestimmen einer Kante (entsprechend Biegeradius 21) entlang des Einstellflansches 4 und einer Übergangslinie 23 zwischen Biegeradius 21 und Einstellflansch 4.
   oder
   - Bestimmen einer Arbeitsrichtung 10 und Anschmiegen von in der Arbeitsrichtung 10 verlaufenden Geraden an den Einstellflanschbereich zur Bestimmung einer Berührungslinie 23 entsprechend den Berührungspunkten 23 der angeschmiegten Geraden mit der Kante.
   oder
   - Manuelles oder computerunterstütztes Bestimmen eines Randes 6, tangentenstetiges Ansetzen einer Verrundungsfläche entsprechend dem Biegeradius 21, aber mit geändertem Radienverlauf, und Anschmiegen von in der Arbeitsrichtung 10 verlaufenden Geraden an die Verrundungsfläche zur Bestimmung einer Berührungslinie 23 entsprechend den Berührungspunkten 23 der angeschmiegten Geraden mit der Verrundungsfläche. In diesem Fall findet eine gleichzeitige Entschärfung des Biegeradius statt.
- Entfernen von Teilen des Geometriemodelles welche sich ausserhalb der Übergangslinie 23 respektive der Berührungslinie 23 befinden.
- Hinzufügen, von dieser Berührungslinie 23 ausgehend und in Arbeitsrichtung verlaufend, einer Zylinderfläche 22 (entsprechend den angeschmiegten Geraden an das Geometriemodell).
- Abwickeln des Flanschbereiches 4 der Zielstufe auf diese Zylinderfläche 22 zur Bestimmung einer Begrenzungslinie 25 auf der Zylinderfläche als Begrenzungslinie des abgewickelten Flanschbereiches. Die Abwicklung kann rein geometrisch oder unter Einbezug einer physikalischen Simulation der entsprechenden Umformung geschehen. Das Geometriemodell mit der angefügten und durch die Begrenzungslinie 25 begrenzten Zylinderfläche 22 entspricht einer abgekanteten Stufe mit dem Abkantflansch 3.
- Bestimmen von Werkzeuggeometrien von Abkantwerkzeugen anhand der Geometrie der Ausgangs-Geometriestufe und/oder der Geometrie der abgekanteten Stufe und der Arbeitsrichtung, vorzugsweise anhand der noch nicht nach unten respektive nach aussen begrenzten Zylinderfläche 22.
- Bestimmung einer Geometrie eines Einstellschiebers 17 und eines korrespondierenden Füllschiebers 26 oder eines Nachformwerkzeuges entsprechend einer Geometrie des Einstellflansches 4 und gegebenenfalls der abgekanteten Stufe.

Falls bei der Umformung lediglich ein Abkantflansch zu erzeugen ist, werden die entsprechenden Abkantwerkzeuge nach Massgabe der Zylinderfläche 22 erzeugt, und entfällt die Bestimmung der Einstellwerkzeuge.

Dieses Vorgehen zur Erzeugung von Abkantflanschen ist für den Anwender äusserst einfach und schnell durchzuführen. Es reicht aus, den Einstellflansch grob zu definieren und die Abkantrichtung 10 vorzugeben. Den genauen zu ersetzenden Bereich des Einstellflansches, das heisst die manuell mit üblicher CAD-Methodik äusserst zeitaufwendig zu bestimmende Übergangslinie 23 zum Abkantflansch, wird vollständig automatisch ermittelt. Bei einer Anpassung der Abkantrichtung wird dieser Bereich vollständig automatisch angepasst. Das gleiche gilt für die Ermittlung der Randes 25 des Abkantflansches, welche vollständig automatisch durchgeführt wird. Verglichen mit der üblichen CAD-Vorgehensweise erlauben die zur Bestimmung der optimalen Abkantrichtung und des optimalen Angriffsverlaufs der Abkantbacken und der Einstellschieber zur Verfügung gestellten Hilfsmittel und die Parametrisierung eine wesentlich schnellere Erstellung von besser abgesicherten Abkant- und Einstellwerkzeugen.

### Überdrücken (rückfedern):

Müssen die Winkel von Flanschen zur Kompensation einer Rückfederung überdrückt werden, so wird die überdrückte Form als Zwischengeometrie definiert. Hierfür wird der Flansch in der Zielgeometrie selektiert, um eine vorgegebene Klappkante starr um den vorgegebenen Klappwinkel gedreht und der Übergangsbereich zwischen dem starren rotierten Bereich und dem festen Bereich tangentenstetig angepasst.

Die Operatorparameter sind im Wesentlichen die Flanschgeometrie, die Klappkante und der Überdrückwinkel. Der Operator entspricht im Umformprozess einem fiktiven Umformschritt, nämlich einer Rückfederung, welche bei der Entnahme aus den Umformwerkzeugen von selbst erfolgt. Werkzeuge sind deshalb keine abzuleiten.

### Ausklappen (hochstellen):

Um die Ziehtiefe möglichst gering zu halten, können Bereiche des Umformteils von einer Geometriestufe zur anderen ausgeklappt werden, wobei bereits im Detail geformte Stellen ohne Änderung mitgeklappt werden. Die Klappkante ist dabei meist gerade und liegt in einem ebenen Bereich. Der Geometrie-Operator ist gleich wie beim Überdrücken definiert und implementiert. Da die Klappwinkel deutlich grösser sind als beim Überdrücken, ist dem Übergangsbereich zwischen dem rotierten und dem feststehenden Geometriebereich besondere Aufmerksamkeit zu schenken: Hier wird eine tangentenstetig eingepasste Verrundungsfläche angestrebt. Bei gerader Klappkante ist diese einfach zu erzeugen. Der starr rotierte Bereich wird zudem so positioniert, dass im Bereich der Klappkante die Flächeninhalte vor und nach dem Klappen gleich gross sind, also durch das Klappen keine Streckung oder Stauchung stattfindet.

Der Operator entspricht im Umformprozess einem Hochstellschritt. Die zur Lagerung des Umformteiles notwendigen Werkzeuge, in der Regel Auflage und Halter, werden aus der Zielgeometrie erzeugt. Das Hochstellen wird durch eine Abkantbacke bewirkt, welche wie oben unter "Ziehgeometrie ankonstruieren" beschrieben analog automatisch erzeugt wird, wobei die für die Erzeugung massgebende, dem Abkantflansch entsprechende Fläche der Flächenbereich ist, welcher in der Zielgeometrie auf dem auszuklappenden Bereich unmittelbar an der Klappkante liegt, eben ist und damit die für Abkantbacken notwendige Bedingung des allgemeinen Zylinders erfüllt. Der Werkzeugweg der Abkantbacke wird automatisch so gewählt, dass die Abkantbacke genügend weit über den Klappbereich streift, um diesen vollständig hochzustellen, jedoch nur so weit, dass eventuell schon vorgeformte Details im Klappbereich nicht beeinflusst werden.

### Entschärfen / Vorlagen generieren (nachschlagen):

Aus Gründen der Umformbarkeit ist es notwendig, Geometriebereiche mit engen Radien zu entschärfen bzw. Vorlagen zu generieren. Dies erfolgt entweder direkt durch manuelle, konstruktive Vorgabe der entschärften Geometrie als Ausgangsgeometrie oder durch automatisches Glätten der Zielgeometrie. Die Operatorparameter sind damit durch die verknüpften Geometrien bestimmt.

Eine spezielle Art des Entschärfens ist das Vergrössern von Radien, wobei für einen kleinen Biegeradius eine Ausgangsgeometrie mit einem grösseren Biegeradius an derselben Stelle des Bleches erzeugt wird. Dabei wird die Ausgangsgeometrie durch Vorgabe eines Biegeradius an einer gewissen Stelle der Zielgeometrie bestimmt. In diesem Fall kann der Biegeradius als vorgebbarer Operatorparameter verwendet werden, aus dem automatisch die Ausgangsgeometrie berechnet wird, woraus wiederum die übrigen Operatorparameter, also die Werkzeugparameter bestimmt werden.

Der Operator entspricht im Umformprozess einem Nachschlagschritt. Die erforderlichen Werkzeuge, in der Regel Auflage, Halter und Nachschlagbacken, und die übrigen Prozessparameter werden automatisch aus der Zielgeometrie abgeleitet.

### Bombieren (rückfedern):

Müssen Geometriebereiche zur Kompensation einer Rückfederung bombiert werden, so wird die bombierte Form als Zwischengeometrie definiert. Hierfür definiert der Anwender zuerst den zu bombierenden Bereich und gibt dann in diesem Bereich an einzelnen Stellen die gewünschte Bombierungshöhe vor. Daraus wird eine glatte Höhenfunktion interpoliert, welche sich über den zu bombierenden Bereich erstreckt und an dessen Rändern zu null wird. Diese Höhenfunktion wird dann der Zielgeometrie additiv überlagert. In der Zielgeometrie vorhandene Geometriemerkmale werden dadurch nur leicht deformiert und bleiben prinzipiell erhalten.

Die Operatorparameter sind der Bombierungsbereich und die stellenweisen Höhenvorgaben. Der Operator entspricht im Umformprozess einem fiktiven Umformschritt, nämlich einer Rückfederung, welche bei der Entnahme aus den Umformwerkzeugen von selbst erfolgt. Werkzeuge sind deshalb keine abzuleiten.

### Ziehgeometrie abwickeln (ziehen):

Die erste Ziehstufe wird als Zielgeometrie auf die ebene Platine respektive die Ausgangsgeometrie abgewickelt. Hierfür wird die nach dem Ziehen gewünschte eingezogene Berandung des Bleches vorgegeben, z.B. als konstanter Offset von der Stempeldurchgangslinie, und dieses so berandete Blech wird z.B. unter Berücksichtigung von Material- und Prozesseigenschaften mittels einer physikalischen Simulation, z.B. mittels eines inversen Einschrittverfahrens abgewickelt. Die Operatorparameter sind im Wesentlichen der eingezogene Blechrand in der Zielgeometrie sowie die Material- und Prozesseigenschaften.

Der Operator entspricht im Umformprozess der ersten Ziehoperation. Die erforderlichen Werkzeuge, in der Regel Stempel, Matrize und Blechhalter, und die übrigen Prozessparameter werden automatisch aus der Zielgeometrie und gegebenenfalls aus vorangehenden Geometriestufen abgeleitet.

### Platine auf Coil anordnen (Platine ausschneiden):

Die abgewickelte Platine wird in eine durch gerade oder gebogene Messer schneidbare Standardplatine überführt, z.B. durch Umschreibung mit einem Rechteck oder Trapez mit minimaler Fläche, oder sie wird als Formplatine auf dem Coil verschachtelt. Ausgangsgeometrie ist der Coil respektive die notwendige Coilbreite. Der Operatorparameter ist im wesentlichen der gewünschte Platinentyp.

Der Operator entspricht im Umformprozess dem Abscheren bzw. Ausschneiden der Platine vom Coil. Die Beschnittlinie ist automatisch durch die Anordnung der abgewickelten Platine auf dem Coil definiert.

### Rotieren (schwenken):

Die Haupt-Arbeitsrichtung bezüglich des Blechs, oder umgekehrt die Orientierung der Geometriestufe in der Presse kann von einer Prozess-Operation zur nächsten geändert werden. Dies wird durch eine Rotation oder Drehung der Geometriestufe mittels eines Rotations-Operators dargestellt.

Der Operator entspricht im Umformprozess dem Schwenken des Umformteiles vor dem Einlegen in die nächste Presse. Diese Schwenkung wird in der Simulation automatisch ausgeführt, was die Modellierung des Einlegens des teilweise geformten Umformteiles in die Werkzeuge der folgenden Prozess-Operation und damit das Aufsetzen von Simulationen mehrstufiger Umformprozesse erheblich vereinfacht.

Bei der Bestimmung von Werkzeugparametern aus korrespondierenden Geometrien wird davon ausgegangen, dass die Geometrie die Form des Bleches ist, wenn die Werkzeuge vollständig geschlossen sind. Dabei ist zu berücksichtigen, dass in dem realen Prozess die Bleche i.A. kleiner als die Werkzeuge sind. Deshalb wird beim beschriebenen Vorgehen die Geometrie jeweils um einen fiktiven Anteil erweitert, so dass sie bei der Bestimmung der Werkzeuggeometrie als beliebig weit ausgedehntes und verformbares Blech erscheint, auch "Skin" genannt. Die Geometrie wird dann in verschiedene, einander zum Teil überlappende Bereiche aufgeteilt, welche dann den Werkzeugen wie z.B. Blechhalter, Stempel, Schieber, Matrize zugeordnet werden und deren Geometrie definieren.

Bei jedem der Geometrie-Operatoren werden darauf aus den Werkzeugparametern die Daten für eine Simulation des entsprechenden Umformprozessschrittes automatisch erzeugt.

Im Folgenden werden die in den Figuren 1 und 2 gezeigten Geometrie-Operatoren tabellarisch charakterisiert.

| **Operator** | **Typ** | **entsprechender Umformschritt** | **zugeordnete Prozessoperation** |
|---|---|---|---|
| e1, e2 | Löcher füllen | lochen | PO3 |
| e3 | Loch füllen | lochen | PO4 |
| m1 | überdrücken | rückfedern | |
| m2 | ausklappen | hochstellen | PO5 |
| m3 | Abkantflansche ankonstruieren | einstellen | PO6 |
| m4 | Vorlage generieren | nachschlagen | PO4 |
| m5 | Radien vergrössern | nachschlagen | PO4 |
| m6 | entschärfen | nachschlagen | PO3 |
| m7 | bombieren | rückfedern | |
| m8-e4 | Ziehgeometrie ankonstruieren, Flansche abwickeln | beschneiden | PO3 |
| | | abkanten | PO5 |
| e5 | Ziehgeometrie ankonstruieren | beschneiden | PO4 |
| m9 | Ziehgeometrie abwickeln | ziehen | PO2 |
| e6 | Platine auf Coil anordnen | Platine ausschneiden | PO1 |

Nachdem die Geometriestufen und Geometrie-Operatoren einmal definiert sind, können lokale Änderungen dank der Verknüpfung und der Parameterisierung der Geometrie-Operatoren automatisch propagiert werden:
- Wird beispielsweise in Geometriestufe GS5 die Form der mittigen Ausbuchtung manuell modifiziert, beispielsweise weil in der Simulation beim Umformprozessschritt entsprechend m5 eine zu starke Materialverdünnung erkannt wurde, so werden die Modifikationen automatisch über m7 auf GS6 propagiert, auf GS7 kopiert und die Parameter des Geometrie-Operators m9 zum Vorformen und auch der entsprechenden Werkzeuge automatisch nachgeführt.
- Wird in GS1 die Form der mittigen Ausbuchtung modifiziert, so wird diese automatisch in GS2 bis GS4 kopiert und die Parameter des Geometrie-Operators m5 zum Nachschlagen und der entsprechenden Werkzeuge automatisch nachgeführt.
- Wird in GS1 die Form des rechten Flansches modifiziert, so wird diese über m2 in der ungeklappten Form automatisch nachgeführt und daraus auch die Parameter des Geometrie-Operators zur Flanscherzeugung m6 und der entsprechenden Werkzeuge automatisch nachgeführt.

Die Propagationsrichtung von Änderungen ist also in der Regel stets in Richtung der weniger bearbeiteten Geometriestufen. Änderungen in einer Geometrie oder eines Operatorparameters werden rekursiv durch die abhängigen Geometriestufen und dadurch auch zu den abhängigen Operatoren und Werkzeugparametern propagiert.

Ein Algorithmus für diese automatische Propagation basiert darauf, dass
- die Geometrie-Operatoren, welche Geometriebereiche assoziativ miteinander verknüpfen, und ferner
- die Verknüpfungen der Geometrie-Operatoren mit ihren abhängigen Werkzeug- und Bearbeitungsparametern
einen gerichtete Graphen der Abhängigkeiten bilden. Falls eine Änderung respektive Modifikation einer Geometrie oder eines Parameters auftritt, werden die folgenden beispielhaften Propagationsregeln wiederholt und rekursiv angewandt, bis die Änderung durch den Graphen hindurchpropagiert sind. Dies geschieht beispielsweise in bekannter Weise durch Abarbeiten der Regeln gemäss einer Breitensuche durch den Graphen.
- Falls zu einem modifizierten Geometriebereich ein Operator existiert, dessen Anwendungsbereich in der Zielstufe des Operators sich mit diesen modifizierten Geometriebereich überschneidet, dann wird dieser Operator angewendet und gegebenenfalls die Geometrie der Ausgangsstufe des Operators entsprechend modifiziert.
- Falls ein modifizierter Geometriebereich als Parameter für einen Operator wirksam ist, bei welchem die übrigen Parameter des Operators von diesem Geometriebereich abhängen, dann werden diese übrigen Parameter dieses Operators modifiziert.
- Falls ein modifizierter Parameter für einen Operator wirksam ist, bei welchem die Geometrie der Ausgangsstufe des Operators von diesem modifizierten Parameter abhängen, dann wird diese Geometrie der Ausgangsstufe modifiziert.
- Falls die Parameter eines Operators modifiziert worden sind, so werden die davon abhängig verknüpften Werkzeug- und Bearbeitungsparameter nachgeführt.

In seltenen Fällen kann der Graph Schleifen aufweisen, beispielsweise wenn die Geometrie einer Stufe einen Operator zu einer weiter bearbeiteten Stufe beeinflusst. Zum Beispiel ist es beim Auslegen einer zweiten Ziehstufe, welche bei Bauteilen mit hohen Ziehtiefen verwendet werden, oft vorteilhaft, die Blechhalterfläche der im Umformprozess zweiten Stufe auf Basis der Blechhalterfläche der im Umformprozess vorangehenden ersten Stufe zu erzeugen. In solchen Fällen werden entweder die Änderungen wiederholt durch die Schleife propagiert, bis die betroffenen Variablen konvergieren, oder aber die Neuberechnung wird nach einer vorgegebenen Anzahl von Durchläufen durch die Schleife gestoppt.

In einer bevorzugten einfachen Ausführungsform der Erfindung werden in einem ersten Schritt, ausgehend von der ersten Geometriestufe, alle auf diese Stufe anwendbaren Operatoren ausgeführt, und damit die nächste Geometriestufe und die entsprechenden Werkzeugparameter berechnet. Dieser Schritt wird wiederholt auf die nächste und die nachfolgenden Geometriestufen angewandt.

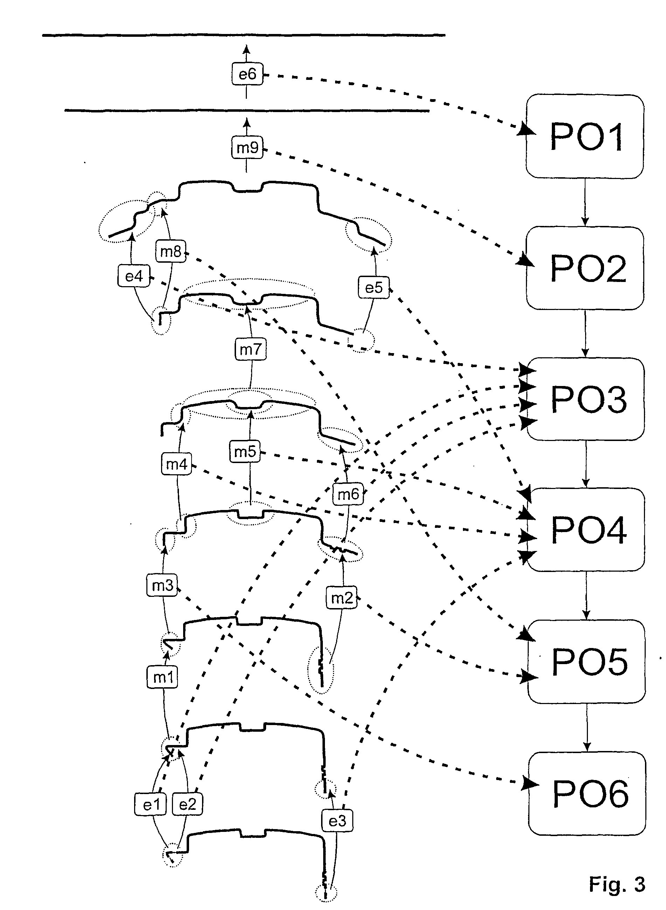

Figur 3 zeigt die Zuordnung von Geometrie-Operatoren m1-m9 und e1-e6 zu Prozess-Operationen PO1-PO6, entsprechend der obigen Tabelle. Entsprechend dieser Darstellung werden jeweils mehrere Geometrie-Operatoren, die unterschiedlichen Geometriestufen GS1-GS9 zugeordnet sein können, jeweils einer Prozess-Operation PO1-PO6 zugeordnet. Aus praktischen Gründen werden dabei vorteilhaft jeweils Geometrie-Operatoren mit gleicher Arbeitsrichtung bezüglich des Blechs zusammengefasst. Es ist zunächst jedem Geometrie-Operator m1-m9 und e1-e6 genau ein Umformprozessschritt zugeordnet. Ein solcher Umformprozessschritt ist beispielsweise als Softwareobjekt implementiert und weist Daten zur Beschreibung der beteiligten Werkzeuge auf.

Die Pfeilrichtungen bei den Geometrie-Operatoren wie auch bei der Zuordnung von Geometrie-Operatoren zu Prozess-Operationen geben die Einflussrichtung bei der Propagation von Änderungen wieder.

Der Produktionsprozess oder eine Simulation desselben läuft dann in umgekehrter Reihenfolge entsprechend den Prozess-Operationen ab, in der Figur 3 durch die Pfeile zwischen den Prozess-Operationen PO1-PO6 dargestellt. Jede Prozess-Operation entspricht in Realität einem Satz von Werkzeugen, die in eine Presse eingebaut sind. Die Simulation des Produktionsprozesses wird entsprechend den Geometrie-Operatoren und deren Zuordnung zu Prozess-Operationen PO1-PO6 automatisch aus den Geometriestufen des Methodenplans abgeleitet.

Computertechnisch können Teilegeometrien als Geometrie-Objekte dargestellt sein. Im Begriff Geometrieobjekt ist das Wort "Objekt" als computertechnischer Begriff zu verstehen, also als eine Einheit von zusammengehörenden Daten welche gemeinsam eine Entität beschreiben. Ein Geometrieobjekt weist eine Darstellung eines physischen Objektes oder eines Merkmals eines physischen Objektes auf, beispielsweise einer Linie, einer Fläche oder eines Körpers. Bei der Bestimmung eines Geometrieobjekts wird im Wesentlichen eine geometrische Modellbeschreibung eines physischen Objekts berechnet.

Computertechnisch ist ein Operator durch eine Datenstruktur oder ein Softwareobjekt im Sinne der objektorientierten Programmierung implementiert, welche beispielsweise Zeiger auf die verknüpften Geometrieobjekte, und Eigenschaften der einen oder mehreren Bearbeitungsschritten repräsentiert. Eine Überwachungsroutine des CAD-Systems kontrolliert, ob Änderungen in einem ersten Geometrieobjekt oder in Parametern des Operators stattgefunden haben, und löst automatisch eine Neuberechnung entsprechend dem Operatorverfahren aus. Durch die Neuberechnung wird ein weiteres Geometrieobjekt oder ein Objekt zu Beschreibung von Werkzeugen modifiziert, und gegebenenfalls eine Aktualisierung über weitere Operatoren zu weiteren Objekten propagiert.

Im klassischen Ablauf von Umformoperationen werden Umformprozessschritte in Pressen respektive Transferpressen durchgeführt. Durch eine Bewegung der Presse in einer Hauptarbeitsrichtung können mehrere einzelne Umformprozessschritte an verschiedenen Stellen des Bleches in einem Arbeitsgang ausgeführt werden. Beispielsweise kann in einem Bereich ein Abkanten, in einem zweiten Bereich ein Nachformen einer Kante und in einem dritten Bereich eine Beschneideoperation am gleichen Blech durchgeführt werden. Für hinterschnittige Operationen werden zusätzlich zur Hauptarbeitsrichtung noch Schieber mit anderen Arbeitsrichtungen als Teil einer Presse beziehungsweise eines Werkzeuges eingesetzt. Die Gesamtheit aller in einer Presse vorgenommen Umformprozessschritte wird hier als UmformOperation oder Prozess-Operation beschrieben.

Zwischen den Pressen werden die Platinen durch Transferschritte überführt, wobei je nach Arbeitsrichtung der Pressen auch eine Schwenkung des Umformteiles vorgenommen werden kann.

Alternativ zur obigen Anordnung von Einzelpressen wird im Verfahren mit Folgeverbundwerkzeug eine ununterbrochene Platine durch mehrere Stationen durchgeführt und dabei den Prozess-Operationen unterzogen. Das komplette Freischneiden des Bauteils erfolgt dabei in der Regel erst in der letzten Operation. Analog zu oben findet in einer Station eine Bearbeitung in einer Hauptarbeitsrichtung und gegebenenfalls auch in anderen Arbeitsrichtungen statt.

### BEZUGSZEICHENLISTE

- GS1 .. GS9: Geometriestufen
- m1 .. m9: Operatoren zur Geometrie-Modifikation
- e1 .. e6: Operatoren zur Geometrie-Erweiterung
- PO1 .. PO6: Prozess-Operationen
- 1: Addendum (schliesst 20 mit ein)
- 2: Blechhalterring
- 3: Abkantflansch
- 4: Einstellflansch
- 5: Blechhalterfläche
- 6: Rand
- 7: Stempeldurchgangslinie
- 8: ursprüngliche Geometriestufe (ohne Flansche)
- 9: Flanschrand
- 10: Arbeitsrichtung
- 11: Abkantbacke
- 12: Backenhöhe
- 13: Backenradius
- 14: B ackenkante
- 15: Einstellschieber
- 16: Verrundungsfläche
- 17: Schieberrichtung
- 18: Auflage
- 19: Halter
- 20: abgewickelter Flansch
- 21: Biegeradius
- 22: Zylinderfläche
- 23: Berührungspunkte, Berührungslinie
- 24: Berandungslinie
- 25: abgewickelte Berandungslinie
- 26: Füllschieber
- 27: Gerade
- 28: Auflage
- 29: Backenboden

## Patentansprüche

1. Ein Verfahren zur Bestimmung, mittels eines computergestützten Designsystems, von Prozess-Operationen (PO1-PO6) zur Beschreibung von Umformprozessen an einem Umformteil, aufweisend die folgenden Schritte:
• Definieren von Geometriemodellen zur computertechnischen Beschreibung einer Geometrie des Umformteiles in einem Zielzustand;
• Definieren von mehreren Geometrie-Operatoren (m1-m9, e1-e6), wobei ein Geometrie-Operator (m1-m9, e1-e6) eine Geometrie eines Bereiches eines ersten Geometriemodells mit einer Geometrie eines Bereiches eines zweiten Geometriemodells assoziiert, und der Geometrie-Operator (m1-m9, e1-e6) einen Übergang von einer der beiden assoziierten Geometrien zu der anderen beschreibt; und
• Definieren von mehreren Gruppen von jeweils mindestens einem Geometrie-Operator (m1-m9, e1-e6), wobei jede der Gruppen jeweils mit einer Prozess-Operation (PO1-PO6) assoziiert ist.

2. Das Verfahren gemäss Anspruch 1, aufweisend den folgenden Schritt:
• Anwenden mindestens eines der Geometrie-Operatoren (m1-m9, e1-e6) zur Berechnung einer ersten von zwei assoziierten Geometrien aus der zweiten.

3. Das Verfahren gemäss Anspruch 1 oder 2, aufweisend den folgenden Schritt:
• Bestimmen von Parametern von mindestens einem der Geometrie-Operatoren (m1-m9, e1-e6) aus einer Geometrie der beiden durch den Geometrie-Operator assoziierten Geometrien.

4. Das Verfahren gemäss einem der vorangehenden Ansprüche, aufweisend den folgenden Schritt:
• Gruppieren von mehreren Geometriemodellen von Bereichen als Definition einer Geometriestufe (GS1-GS9), wobei eine Geometriestufe eine zumindest fiktive Geometrie des Umformteiles als Ganzem beschreibt.

5. Das Verfahren gemäss einem der vorangehenden Ansprüche, aufweisend den folgenden Schritt:
• bei einer Änderung einer Geometrie eines Bereiches, automatische und rekursive Neuberechnung von abhängig verknüpften Geometrien von Bereichen, nach Massgabe des verknüpfenden Operators.

6. Das Verfahren gemäss einem der vorangehenden Ansprüche, wobei Geometrie-Operatoren miteinander verkettet sind, d.h. ein Operator auf das Ergebnis eines anderen Operators angewendet wird.

7. Das Verfahren gemäss einem der vorangehenden Ansprüche, wobei die Geometrie-Operatoren (m1-m9, e1-e6) mindestens einen der folgenden Operatortypen aufweisen: Löcher füllen, Ziehgeometrie ankonstruieren / Flansche abwickeln, Abkantflansche ankonstruieren, überdrücken, ausklappen, entschärfen / Vorlagen generieren, bombieren, Ziehgeometrie abwickeln, Platine auf Coil anordnen, rotieren.

8. Das Verfahren gemäss einem der vorangehenden Ansprüche, wobei eine Definition eines Operators eine Simulation eines Umformprozesses beinhaltet.

9. Das Verfahren gemäss einem der vorangehenden Ansprüche, aufweisend den folgenden Schritt:
• Gliederung einer Beschreibung von Umformprozessen auf einem computerlesbaren Medium und/oder für eine Benutzerschnittstelle entsprechend den Gruppen von jeweils mehreren Geometrie-Operatoren (m1-m9, e1-e6).

10. Das Verfahren gemäss einem der vorangehenden Ansprüche, aufweisend den folgenden Schritt:
• automatisches Erzeugen von Werkzeug- und Bearbeitungsparametern zur Realisierung mindestens eines der Geometrie-Operatoren (m1-m9, e1-e6).

11. Das Verfahren gemäss einem der vorangehenden Ansprüche, aufweisend den folgenden Schritt:
• Simulation durch die Werkzeug- und Bearbeitungsparameter definierter Prozess-Operationen (PO1-PO6) und daraus Berechnung von entsprechend umgeformten Teilegeometrien.

12. Das Verfahren gemäss Anspruch 10 oder 11, aufweisend den folgenden Schritt:
• bei einer Änderung einer Geometrie eines Bereiches, automatische Neuberechnung von abhängig verknüpften Werkzeug- und Bearbeitungsparametern.

13. Datenverarbeitungssystem zur Bestimmung von Prozess-Operationen (PO1-P06) zur Beschreibung von Umformprozessen an einem Umformteil, wobei das Datenverarbeitungssystem Mittel aufweist zur Durchführung des Verfahrens nach einem oder mehreren der Ansprüche 1 bis 12.

14. Computerprogramm zur Bestimmung von Prozess-Operationen (PO1-PO6) zur Beschreibung von Umformprozessen an einem Umformteil, welches auf einer Datenverarbeitungseinheit ladbar und ausführbar ist, und welches bei der Ausführung das Verfahren nach einem oder mehreren der Ansprüche 1 bis 12 ausführt.

15. Datenträger, enthaltend ein Computerprogramm gemäss Anspruch 14.

## Claims

1. A method for determining, by means of a computer-assisted design system, of process operations (PO1-PO6) for the description of forming processes on a forming part, comprising the following steps:
• defining geometry models for the computerised description of a geometry of the forming part in a target state;
• defining several geometry operators (m1-m9, e1-e6), wherein a geometry operator (m1-m9, e1-e6) associates a geometry of an area of a first geometry model with a geometry of an area of a second geometry model, and the geometry operator (m1-m9, e1-e6) describes a transition from one of the two associated geometries to the other one; and
• defining several groups of each at least one geometry operator (m1-m9, e1-e6), wherein each of the groups respectively is associated with a process operation (PO1-P06).

2. The method in accordance with claim 1, comprising the following step:
• applying at least one of the geometry operators (m1-m9, e1-e6) for the calculation of a first one of two associated geometries from the second one.

3. The method in accordance with claim 1 or 2, comprising the following step:
• determining parameters of at least one of the geometry operators (m1-m9, e1-e6) from a geometry of the two geometries associated by the geometry operator.

4. The method in accordance with one of the preceding claims, comprising the following step:
• grouping several geometry models of areas as the definition of a geometry stage (GS1-GS9), wherein a geometry stage describes an at least fictitious geometry of the forming part as a whole.

5. The method in accordance with one of the preceding claims, comprising the following step:
• In case of a change of a geometry of an area, automatically and recursively recalculating dependently associated geometries of areas, in accordance with the associating operator.

6. The method in accordance with one of the preceding claims, wherein geometry operators are linked together, i.e., an operator is applied to the result of another operator.

7. The method in accordance with one of the preceding claims, wherein the geometry operators (m1-m9, e1-e6) comprise at least one of the following operator types: Filling holes, adding drawing geometry / uncoiling flanges, adding folding flanges, over-pressing, unfolding, pre-forming / generating patterns, casing, uncoiling drawing geometry, arranging billet on coil, rotating.

8. The method in accordance with one of the preceding claims, wherein a definition of an operator comprises a simulation of a forming process.

9. The method in accordance with one of the preceding claims, comprising the following step:
• structuring a description of forming processes on a computer-readable medium and/or for a user interface corresponding to the groups of respectively several geometry operators (m1-m9, e1-e6).

10. The method in accordance with one of the preceding claims, comprising the following step:
• automatically generating tool parameters and processing parameters for the implementation of at least one of the geometry operators (m1-m9, e1-e6).

11. The method in accordance with one of the preceding claims, comprising the following step:
• simulating process operations (PO1-PO6) defined by the tool parameters and processing parameters and from this calculating of correspondingly formed part geometries.

12. The method in accordance with claim 10 or 11, comprising the following step:
• In case of the modification of a geometry of an area, automatically recalculating dependently associated tool parameters and processing parameters.

13. A data processing system for the determination of process operations (PO1-PO6) for the description of forming processes on a forming part, wherein the data processing system comprises means for the implementation of the method in accordance with one or several of the claims 1 to 12.

14. A computer program for the determination of process operations (PO1-PO6) for the description of forming processes on a forming part, which is capable of being loaded on to a data processing unit and executed, and which during its execution carries out the method in accordance with one or several of the claims 1 to 12.

15. A data carrier, comprising a computer program in accordance with claim 14.

## Revendications

1. Procédé pour la détermination, au moyen d'un système de conception assisté par ordinateur, d'opérations de processus (PO1-PO6) pour la description de processus de formage sur une pièce formée, comportant les étapes suivantes :
• définition de modèles géométriques pour la description informatique d'une géométrie de la pièce formée dans un état-cible ;
• définition de plusieurs opérateurs géométriques (m1-m9, e1-e6), un opérateur géométrique (m1-m9, e1-e6) associant une géométrie d'une zone d'un premier modèle géométrique à une géométrie d'une zone d'un deuxième modèle géométrique, et l'opérateur géométrique (m1-m9, e1-e6) décrivant une transition d'une des deux géométries associées vers l'autre géométrie ; et
• définition de plusieurs groupes comprenant chacun au moins un opérateur géométrique (m1-m9, e1-e6), chaque groupe étant associé à une opération de processus (PO1-PO6).

2. Procédé selon la revendication 1, comportant l'étape suivante :
• application d'au moins un des opérateurs géométriques (m1-m9, e1-e6) pour le calcul d'une première géométrie à partir de la deuxième géométrie associée à celle-ci.

3. Procédé selon la revendication 1 ou la revendication 2, comportant l'étape suivante :
• détermination de paramètres d'au moins un des opérateurs géométriques (m1-m9, e1-e6) à partir d'une géométrie des deux géométries associées par l'opérateur géométrique.

4. Procédé selon l'une des revendications précédentes, comportant l'étape suivante :
• regroupement de plusieurs modèles géométriques de zones en tant que définition d'un étage géométrique (GS1-GS9), un étage géométrique décrivant une géométrie au moins fictive de la pièce formée en tant qu'ensemble.

5. Procédé selon l'une des revendications précédentes, comportant l'étape suivante :
• en cas de modification de géométrie d'une zone, nouveau calcul automatique et récursif de géométries de zones liées en conséquence, en fonction de l'opérateur de liaison.

6. Procédé selon l'une des revendications précédentes, où les opérateurs géométriques sont chaînés entre eux, autrement dit un opérateur est appliqué au résultat d'un autre opérateur.

7. Procédé selon l'une des revendications précédentes, où les opérateurs géométriques (m1-m9, e1-e6) comportent au moins un des types d'opérateur suivants : combler des trous, construire une géométrie d'étirage/développer des rebords, construire des rebords pliés, surformer, basculer, émousser/générer des calibrages, emboutir, développer une géométrie d'étirage, disposer une platine sur une bobine, effectuer une rotation.

8. Procédé selon l'une des revendications précédentes, où une définition d'un opérateur comprend une simulation d'un processus de formage.

9. Procédé selon l'une des revendications précédentes, comportant l'étape suivante :
• découpage d'une description de processus de formage sur un support lisible par un ordinateur et/ou pour une interface d'utilisateur par groupes de plusieurs opérateurs géométriques (m 1-m9, el-e6).

10. Procédé selon l'une des revendications précédentes, comportant l'étape suivante :
• génération automatique de paramètres d'outil et d'usinage pour la réalisation d'au moins un des opérateurs géométriques (m 1-m9, e1-e6).

11. Procédé selon l'une des revendications précédentes, comportant l'étape suivante :
• simulation par les paramètres d'outil et d'usinage d'opérations de processus définies (PO1-PO6) et calcul consécutif de géométries de pièces formées en conséquence.

12. Procédé selon la revendication 10 ou la revendication 11, comportant l'étape suivante :
• en cas de modification de géométrie d'une zone, nouveau calcul automatique de paramètres d'outil et d'usinage liés en conséquence.

13. Système de traitement de données pour la détermination d'opérations de processus (PO1-PO6) pour la description de processus de formage sur une pièce formée, ledit système de traitement de données comportant des moyens pour l'exécution du procédé selon l'une ou plusieurs des revendications 1 à 12.

14. Programme informatique pour la détermination d'opérations de processus (PO1-PO6) pour la description de processus de formage sur une pièce formée, qui peut être chargé et exécuté sur une unité de traitement des données, et qui, exécuté, exécute le procédé selon l'une ou plusieurs des revendications 1 à 12.

15. Support de données contenant un programme informatique selon la revendication 14.
